# EUROPEAN PATENT SPECIFICATION

(11) **EP 3 631 530 B1**
(45) Date of publication and mention of the grant of the patent: **30.06.2021**
(21) Application number: 18735348.7
(22) Date of filing: 18.05.2018
(51) Int. Cl.: G01W 1/14, G01N 15/00, G01N 15/02, G03H 1/00, G03H 1/04, G03H 1/08, B64D 15/20

(54) **FREEZING OF STRUCTURES CAUSED BY CLOUD DROPLETS**
GEFRIEREN VON DURCH WOLKENTRÖPFCHEN VERURSACHTEN STRUKTUREN
CONGÉLATION DE STRUCTURES PROVOQUÉE PAR DES GOUTTELETTES DE NUAGE

(30) Priority: 29.05.2017 FI 20175476
(43) Date of publication of application: 08.04.2020
(73) Proprietor: Oulun Yliopisto, 90014 Oulun Yliopisto (FI)
(72) Inventor: KAIKKONEN, Ville, 90014 Oulun yliopisto (FI); MÄKYNEN, Anssi, 90014 Oulun yliopisto (FI); ARSTILA, Timo, 00710 Helsinki (FI); KANANEN, Timo, 87700 Kajaani (FI)
(74) Representative: Berggren Oy
(86) International application number: PCT/FI2018/050373
(87) International publication number: WO 2018/220268

(56) References cited:
- US-A1- 2011 299 079
- US-A1- 2015 336 676
- RYDBLOM STAFFAN ET AL: "Liquid Water Content and Droplet Sizing Shadowgraph Measuring System for Wind Turbine Icing Detection", IEEE SENSORS JOURNAL, IEEE SERVICE CENTER, NEW YORK, NY, US, vol. 16, no. 8, 1 April 2016 (2016-04-01), pages 2714-2725, XP011600546, ISSN: 1530-437X, DOI: 10.1109/JSEN.2016.2518653 [retrieved on 2016-02-24]
- KAIKKONEN VILLE A ET AL: "A Holographic In-Line Imaging System for Meteorological Applications", IEEE TRANSACTIONS ON INSTRUMENTATION AND MEASUREMENT, IEEE SERVICE CENTER, PISCATAWAY, NJ, US, vol. 63, no. 5, 1 May 2014 (2014-05-01), pages 1137-1144, XP011544521, ISSN: 0018-9456, DOI: 10.1109/TIM.2013.2295658 [retrieved on 2014-04-03]

## Description

### Field of the invention

The invention relates to a method and measurement system for measuring present icing circumstances and making a forecast about an ice accumulation on a mechanical structure. The invention relates also to a computer program product that is utilized in the measurement system.

### Background of the invention

In cold and high-lying areas different kind of mechanical structures may experience in a short time very heavy mechanical stress caused by cloud droplets, which are capable to ice on the mechanical structure. Mechanical structures that may ice in certain meteorological conditions are for example wind turbine rotor blades, power transmission lines and also airplane wings. Evaluation of the icing conditions in the pre-construction phase allows proper design of mechanical structures and needed de-icing solutions.

High and cold exposed structures are susceptible to ice due to cloud droplets. A shape and material of a structure has a significant effect on how the structure ices. On the other hand the structure ices very differently in different cloudy conditions.

Known icing sensors in the art are based on observing or measuring the accumulated ice on the mechanical structure. The sensors do not directly measure prevailing meteorological conditions that cause the icing. Known icing sensors measure only icing of a mechanical structure, which has a particular shape. Therefore from the measurement result cannot directly deduce freezing of another shaped object reliably.

Droplet Measurement Technologies Inc. has marketed a forward-scattering optical spectrometer called CDP for analysing for example cloud droplets. The CDP spectrometer can measure cloud droplets that have size distribution from 2 µm to 50 µm. The cloud droplets have to pass through an analyse region of a collimated uniform power laser beam.

When cloud droplets pass through the laser beam the light scatters from the cloud droplets in all directions. The CDP collects forward-scattered photons within an annular cone that is 4° to 12° from the laser beam. The collected light is then directed to a lens system and from there to photodetectors, which convert the photon pulses into electrical sizer pulses. The particle size is then defined based on the amplitude of the sizer pulse.

CDP spectrometer is not a holographic measurement apparatus. It is mainly used in exploratory aircraft.

In wind power plants have been utilized a number of different measuring methods mainly for detecting ice on rotor blades. The detection methods, for example, are based on observation of mechanical oscillations of the blades. Also capacitive sensors are utilized for identifying ice on the surface of the rotor blade. However these measurement systems are detecting ice that has already accumulated on the rotor blade. These measurement results do not depict anything about meteorological conditions that have produced ice on the rotor blade. And therefore the icing information comes only when the ice has already accumulated significantly on the surface of the rotor blade.

Digital holography has been used in the atmospheric sciences to describe also cloud droplets. One holographic measurement system is depicted in US 2011/0299079. An aircraft transports a high volume sample rate holographic measurement instrument through a volume of interest. When the instrument moves the holographic measurement instrument transmits a collimated light beam across the volume of interest along an optical axis. The light beam interacts with particles contained within the volume of interest. A high-speed, one-dimensional detector array detects incident light reflecting patterns of light intensity levels that are associated with the interaction between the collimated light beam and the particles. A processor integrates information relating to the detected patterns and a rate of relative movement between the measurement probe and the volume of interest to determine at least a statistically meaningful sampling of time-dependent particle distribution information associated with an entirety of the volume of interest. Using the time-dependent particle distribution information and automatic reconstruction algorithms running on the processor, the processor reconstructs holograms that depict the particles within the volume of interest. These holograms are then used to measure a spatial distribution, size distribution, number density or concentration, and/or shape of the particles within the volume of interest.

JP 2007263864 discloses a digital holography measuring apparatus for measuring a minute quantity of a minute object in a three-dimensional space by using digital hologram image reproduction. To the three-dimensional measurement space is directed a collimated light beam. An imaging plane that is perpendicular to the irradiation direction of the collimated light beam detects a light amplitude distribution on each reproducing surface at different positions in the depth direction perpendicular to the hologram image.

All above mentioned optical measurement systems utilizes different kind of system of lenses because of to the utilized collimated light beam. The lenses add to the mechanical construction of the measurement apparatus additional optical elements, which complicate the mechanical structure of the measurement apparatus and therefore raise the manufacturing costs of the optical measurement apparatus.

CN 104897538 depicts a dust detection device based on digital holography that does not utilize a lens system. The dust detection device is based on digital holography. The detection device comprises a computer, a monochromatic light source, a pinhole, a filter and a matrix detector. The pinhole restricts a spatial propagation range of the illumination beam to form a point-like light source. The filter is used to limit the wavelength range of the allowed illumination beam. Dust particles in the illumination beam scatter light waves. The amplitude and phase changes of scattered light waves reflect the spatial distribution and particle size distribution of dust particles. A part of the illumination beams are not scattered and they are called reference light waves. The scattered light waves are interfering with the reference light waves and form interference fringes on the matrix detector. The array detector detects the intensity signal of the interference fringes and records the hologram data. The computer processes the optical diffraction data to construct a three-dimensional image of the dust particles in the measurement space. From the three dimensional images of dust particles and the spatial concentration information of the dust particles and the particle size distribution information are then detected dust amount on the site. US 2015/0336676 A1 discloses an aircraft airfoil icing controller that transforms weather and flight parameter data into icing determinations and icing avoidance optimized flight plans based on airfoil type.

### Summary of the invention

An object of the invention is to provide a new and cost effective method for giving information about icing condition of cloud droplets with a short response time. This information is used to detect an icing condition and to monitor development of the icing on a mechanical structure. The new method utilized in a new measurement system allows an earlier reaction time and an accurate estimate of the icing condition thus making possible to minimize drawbacks caused by icing on a mechanical structure.

The objects of the invention are achieved by a method and an in-line holographic measurement system whereby the measurement system defines median volume diameter (MVD) and liquid water content (LWC) of cloud droplets detected in an open measurement space. The in-line holographic measurement system then combines them with meteorological measurement data from a weather station, material and 3D model of the mechanical structure and information depicting a moving speed of the mechanical structure. The utilized in-line holographic measurement system does not utilize a lens system.

An advantage of the invention is that an up-to-date icing condition of a mechanical structure is determined by utilizing measurement data about actually measured cloud droplets.

Another advantage of the invention is that the liquid water content and median volume diameter of the cloud droplets is defined by a single measurement.

Another advantage of the invention is that the velocity of the droplets can be measured using two or more radiation pulses per hologram.

Another advantage of the invention is that by the measurement system it is possible to forecast accumulation of ice on the mechanical structure and to detect the beginning and the end of an icing event from minutes to several hours earlier than the ice sensors based on measuring accumulated ice, depending on the actual icing circumstances.

Another advantage of the invention is that it makes possible to control and optimize icing speed of moving mechanical structures for example by limiting a movement of the mechanical structure relative to the cloud droplets or by controlling heating of the mechanical structure or by altering / moving the icing mechanical structure so that the ice deposition efficiency of cloud droplets on the mechanical structure may be reduced.

A further advantage of the invention is that the system measuring cloud droplets is simple and cheap because the utilized digital in-line holography apparatus is a lens-free structure.

The method according to the invention for measuring present icing circumstances is characterized in that a computer belonging to the forecasting system:
- calculates sizes and number of the cloud droplets in the open measurement space by utilizing the recorded diffraction images
- calculates a liquid water content and median volume diameter of the cloud droplets detected in the open measurement space based on the calculated sizes and number of the cloud droplets (25, 26, 27), and
- combines (38) the liquid water content and median volume diameter calculation results with meteorological measurement data for determining present icing circumstances.

The measurement system for measuring present icing circumstances comprising a computer, is characterized in that the computer is configured to:
- calculate sizes and number of the cloud droplets in the open measurement space by utilizing the recorded diffraction images
- calculate a liquid water content and median volume diameter of the cloud droplets detected in the open measurement space based on the calculated sizes and number of the cloud droplets (25, 26, 27), and
- combine the liquid water content and median volume diameter calculation results with meteorological measurement data for determining present icing circumstances.

The computer program product comprising computer program code means adapted to perform the following program code steps when said program is executed on a computer for measuring present icing circumstances, is characterised in that, for being adapted to forecast icing circumstances, the computer program product comprises:
- code means for calculating sizes and number of the cloud droplets in an open measurement space of an in-line holographic measurement apparatus by utilizing the recorded diffraction images
- code means for calculating a liquid water content and median volume diameter of the cloud droplets detected in the open measurement space based on the calculated sizes and number of the cloud droplets (25, 26, 27), and
- code means for combining (38) the liquid water content and median volume diameter calculation results with meteorological measurement data for determining present icing circumstances.

The idea of the invention is basically as follows. In the lens-less in-line holographic measurement system and method according to the invention a point-like wide-angle radiation source radiates monochromatic electromagnetic radiation. The point-like monochromatic radiation source may be for example a laser, laser diode, an optical fiber, a needle hole or a light emitting diode. The point-like wide-angle radiation source is directed towards an electronic matrix detector such as a digital camera image sensor. During measuring session cloud droplets are drifted to an open measurement space between the point-like monochromatic radiation source and the matrix detector of the measurement apparatus. The cloud droplets in the measurement space scatter and diffract electromagnetic radiation between the point-like monochromatic radiation source and the matrix detector. The diffracted electromagnetic radiation waves interfere with un-diffracted reference electromagnetic radiation waves and form/compose a diffraction pattern on the matrix detector.

From the matrix detector the diffraction pattern image is sent to a computer for pre-processing. The computer can advantageously be part of the actual measuring apparatus. The computer may send the diffraction pattern images to a server via wired or wireless telecommunication networks. The diffraction patterns stored on a computer or sent to a server may advantageously be analysed by a backward propagation prediction algorithm that calculates the waveform of the diffraction pattern on different plane surfaces between the point-like monochromatic radiation source and the detector matrix. In the image analysis a shape of the cloud droplet may be determined. Another way to evaluate the cloud droplets is to match the measured diffraction pattern to known different diffraction patterns and find the best match from the known diffraction patterns. As a result of the image analysis number and size of the individual cloud droplets are obtained. The calculation results may be used to determine the liquid data content (LWC) and the median volume diameter (MVD) in the utilized measurement space. When the obtained calculation data and meteorological data of the measurement place is combined it is possible to make a forecast for ice accumulation in the measurement place in the near future.

In the present invention it is also possible to combine the obtained calculation data of the cloud droplets, the meteorological data and a moving velocity of a mechanical structure with an icing model known in the art. In the present invention by utilizing combined data it is possible to determine an icing pattern at different times for a free-form mechanical structure.

The measurement apparatus according to the invention may either be stationary or rotating instrument mounted for example on a wind turbine blade. When the wind turbine is functioning the measurement apparatus advantageously can measure cloud droplets at different heights. That way the measurement apparatus according to the invention can detect thin or different cloud layers around the wind turbine that may have different icing properties. The measurement apparatus can also measure droplet distributions inside the cloud.

### Brief description of the drawings

The invention is described in detail below. Reference is made to the accompanying drawings in which
- Figure 1: shows some functional elements of an exemplary measurement system according to the invention;
- Figure 2: shows an example of a diffraction pattern of one cloud droplet
- Figure 3: shows in an exemplary flow chart main steps of the method according to the invention, and
- Figure 4: shows functional elements of a computer or a server utilized in the implementation of icing forecasting system according to the invention.

### Detailed description

The embodiments in the following description are given as examples only and someone skilled in the art can carry out the basic idea of the invention also in some other way than what is described in the description. Though the description may refer to a certain embodiment or embodiments in several places, this does not mean that the reference would be directed towards only one described embodiment or that the described characteristic would be usable only in one described embodiment. The individual characteristics of two or more embodiments may be combined and new embodiments of the invention may thus be provided.

The present invention makes possible to determine a size and an amount of cloud droplets inside a cloud. The measurement results may advantageously be combined with measurement results of conventional meteorological measurements such as temperature, relative wind speed, humidity and wind direction and also with a shape and material information of a mechanical structure having moving mechanical parts. Then by utilizing the forecasting method according to the invention it is possible to estimate a severity of icing caused by cloud droplets (i.e. ice accumulation rate), an icing condition change over time, a duration of the icing conditions (i.e. starting and ending time of icing) and a time to start corrective actions for removing the accumulated ice from the mechanical structure.

Additionally, the present invention advantageously allows to proactive control and optimize icing of a stationary or moving mechanical structure for example by limiting a movement speed of the mechanical structure relative to the cloud droplets, by controlling heating of the mechanical structure or by moving or turning the icing mechanical structure so that the deposition efficiency of cold cloud droplets is reduced.

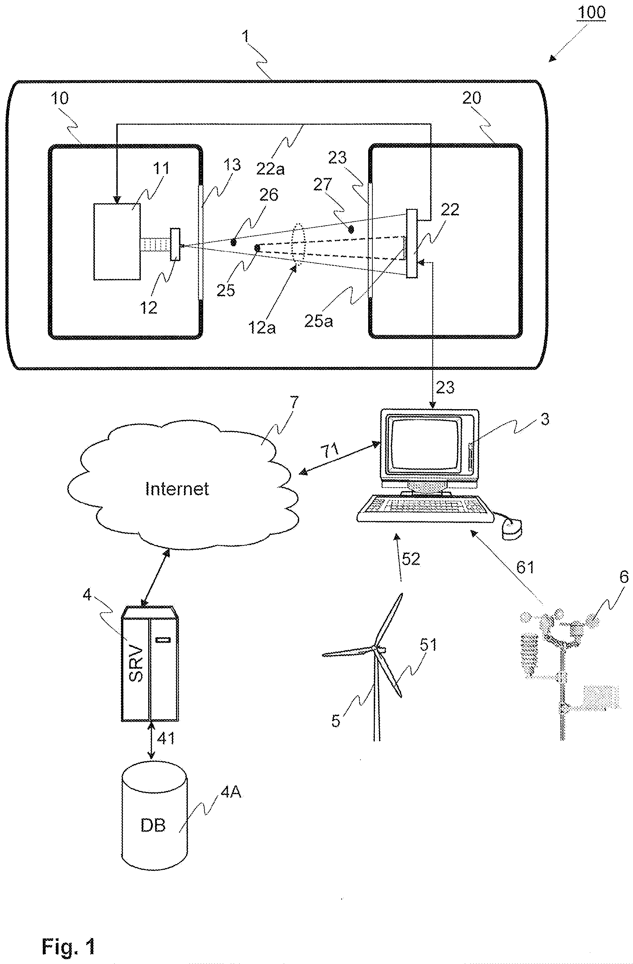

**Figure 1** depicts some functional elements of an exemplary measurement system 100 according to the invention. In the depicted example an icing condition of a rotor blade 51 of a wind turbine 5 can be forecasted. In the following description the inventive method and system is depicted by utilizing the wind turbine case as an example.

However, the inventive icing circumstances forecasting method and system may advantageously be utilized also in context of airplane wings, electric power lines, icing circumstance measurements before construction of high towers and airport or road constructions forecasts, for example.

In Figure 1 the icing circumstances forecasting measurement system 100 according to the invention advantageously comprises an in-line holographic measurement apparatus 1, a computer 3 that has a wired or wireless connection 23 to the in-line holographic measurement apparatus 1. Via this connection the computer 3 advantageously may control operations of the in-line holographic apparatus 1 and may also store diffraction images of the cloud droplets that the in-line holographic apparatus 1 has recorded.

In one advantageous embodiment to the in-line holographic apparatus 1 has been integrated also electrical components and functions that in the following description are depicted to be executed in the computer 3.

The computer 3 has also a connection 52 to a wind turbine 5 and a connection 61 to a meteorological weather station 6. Advantageously the computer 3 belonging to the icing forecasting measurement system 100 has a wired or wireless connection 71 to Internet 7. Via Internet 7 the computer 3 advantageously has a connection to a server 4. The server 4 may belong to a service provider. The server 4 has advantageously a connection 41 to a database 4A. The database 4A may advantageously disclose material and 3D -structural information of different mechanical structures. In the example of Figure 1 the mechanical structure to which an ice accumulation forecast can be made is the rotor blade 51 of the wind turbine 5.

In the icing circumstances forecasting method according to the invention either the computer 3 or the server 4 processes the diffraction pictures of the in-line holographic apparatus 1 by a backward propagation prediction algorithm or by a neural network. The backward propagation algorithm may be for example so called Angular-spectrum method. After the backward propagation prediction process liquid data content (LWC) and median volume diameter (MVD) of the measured cloud droplets in a measurement space of the in-line holographic measurement apparatus 1 may be determined.

The in-line holographic measurement apparatus 1 according to the invention advantageously functions without any optical lens system when it records diffraction images of the cloud droplets.

The in-line holographic measurement apparatus 1 comprises a coherent electromagnetic radiation part 10 and an image sensor part 20. Both the radiation part 10 and the image sensor part 20 have on one side a window 13 or 23 that is transparent to the utilized monochromatic electromagnetic radiation. The in-line holographic measurement apparatus 1 advantageously comprises also a heating system (not shown in Figure 1) that is advantageously controlled by utilizing current cloud droplet measurement results.

The electromagnetic radiation part 10 comprises a point-like wide-angle monochromatic radiation source 12. By using the point-like monochromatic wide-angle radiation source 12 a magnification of a geometric diffraction pattern of cloud droplets may be obtained on the matrix detector 22. Therefore in the in-line holographic measurement apparatus 1 a magnification of the diffraction patterns of the cloud droplets in the measurement space between the coherent electromagnetic radiation part 10 and the image sensor part 20 is achieved with a lens-less imaging. A distance between the coherent electromagnetic radiation part 10 and an image sensor part 20 is advantageously from 20 mm to 100 mm depending on the size of the utilized image sensor. A distance between the windows 13 and 23 may then be between 30 to 70 mm, for example.

The point-like monochromatic radiation source 12 is advantageously a laser, LED or spatially filtered broadband light source. Functioning of the point-like monochromatic radiation source 12 is advantageously controlled by a control unit 11. The control unit 11 advantageously comprises a power unit. The power unit may be a battery or power supply having a connection to an electrical network. The control unit 11 advantageously comprises also a processor unit and a memory where to computer programs needed to execute holographic measurement operations according to the invention are stored.

The control unit 11 advantageously comprises also an interface by which a connection 22a to the matrix detector 22 may be accomplished. Via this connection 22a the matrix detector 22 advantageously sends commands, which controls on-off times of the point-like monochromatic radiation source 12. The matrix detector 22 may, for example, command the point-like monochromatic radiation source 12 to transmit radiation advantageously in pulsed mode.

Pulses per one diffraction image may be more than one. The length of the measurement pulse is advantageously less than 50 nanoseconds in order to stop movement of the droplets in an image.

In the example of Figure 1 from the point-like monochromatic radiation source 12 extends a conical monochromatic radiation pattern 12a towards to the matrix detector 22 of the image sensor part 20. The wave length of the utilized monochromatic radiation may be from 400 nm to 1100 nm. In the conical monochromatic radiation pattern 12a can be seen three exemplary cloud droplets 25, 26 and 27. The size of the cloud droplets may vary from 1 µm to 200 µm.

In the example of Figure 1 in the conical monochromatic radiation pattern 12a is an exemplary cloud droplet 25 that scatters and diffracts a part of the monochromatic radiation pattern 12a so that the matrix detector 22 can record an enlarged diffraction image 25a of the cloud droplet 25. Diffraction images of cloud droplets 26 and 27 have not been drawn in Figure 1 for clarity reasons.

Via the connection 23 the recorded diffraction images are transferred from the matrix detector 22 to the computer 3.

The computer 3 may also control several operations of the in-line holographic apparatus 1. Some examples are commands concerning a start-up, shutdown and measurement parameters settings such as frame rate, luminous intensity, hologram recording mode and heating control.

In the example of Figure 1 the computer 3 has advantageously a wired or wireless connection 61 to a closest meteorological weather station 6. Advantageously the computer 3 receives from the weather station 6 at least up-to-date measurement data concerning temperature, wind speed, wind direction and relativity humidity.

In the present invention it is not necessarily need to make wind measurements separately. The invention makes possible to measure velocity of cloud droplets if more than two exposure pulses per image (hologram) are used. If a time between the radiation pulses is not kept constant and there are at least 3 radiation pulses per image, for example from 2 to 8 measurement pulses, then a movement direction and velocity of the cloud droplets may be determined in the measurement volume, i.e. a wind direction and force may be defined from the stored hologram images.

In the example of Figure 1 the computer 3 has advantageously a wired or wireless connection 52 to a wind turbine 5. In severe icing conditions the rotor blades 51 of the wind turbine 5 may be damaged.

The mechanical 3D -structure and material data of the rotor blade 51 of the wind turbine 5 is advantageously stored in the database 4A. The computer 3 has via internet 7 communication connection to the server 4 and also to the database 4A.

In one advantageous embodiment the computer 3 advantageously pre-processes received diffraction images of the cloud droplets 25, 26 and 27. The computer 3 may for example remove blank images and background from saved diffraction images, add a timestamp and/or group the diffraction images. After pre-processing phase the computer 3 may send the pre-processed diffraction images, meteorological data and data describing 3D -shape and materials of the rotor blade 51 to the server 4.

The server 4 may make an image analyse by utilizing for example a backward propagation prediction algorithm to diffraction patterns of the diffraction images. The image analyse may be done on different plane surfaces between the point-like monochromatic radiation source 12 and the matrix detector 22 for example in 5 to 20 µm intervals. Shapes and sizes of the detected cloud droplets 25, 26 and 27 may be determined in the image analysis. As a result of the image analysis the number and sizes the individual cloud droplets 25, 26 and 27 are obtained.

When the diameter of each cloud droplet 25, 26 and 27 is defined then the volume of each cloud droplet can be calculated as a volume of a sphere. A total water amount in grams may be obtained when diameters of all cloud droplets 25, 26 and 27 are known. When this calculated value is divided by the volume of the measurement space of the in-line holographic measurement apparatus 1 the calculation result depicts water volume versus measurement volume, i.e. liquid water content (LWC) g/m³ in the measurement space of the in-line holographic measurement apparatus 1. In addition, the droplet size distribution of the cloud droplets can be obtained from the diameters of the cloud droplets 25, 26 and 27. From that measurement data can be defined a median volume diameter (MVD), which is an essential parameter in known icing models of different mechanical structures.

When the server 4 combines the liquid water content (LWC) and the median volume diameter (MVD) with the meteorological measurement data, structural and material data and moving speed of the rotor blade 51 the server 4 is capable to forecast icing circumstances at different times in the near future for the rotor blade 51.

In another advantageous embodiment the computer 3 utilizes above mentioned backward propagation prediction algorithm. The computer 3 may combine analysed diffraction images with meteorological data, data describing shape and materials and moving speed of the rotor blade 51 into an icing model the computer advantageously has fetched from the database 4A for establishing a forecast of ice accumulation on the rotor blade 51.

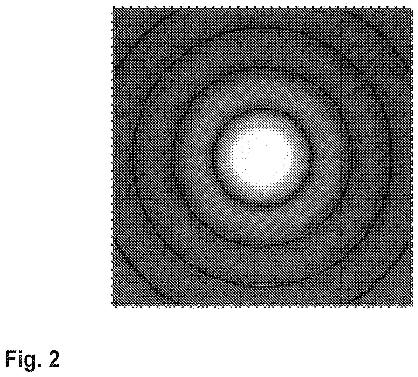

**Figure 2** depicts an exemplary diffraction image that one round cloud droplet, for example cloud droplet 25, can generate on the matrix detector 22 of the in-line holographic measurement apparatus 1.

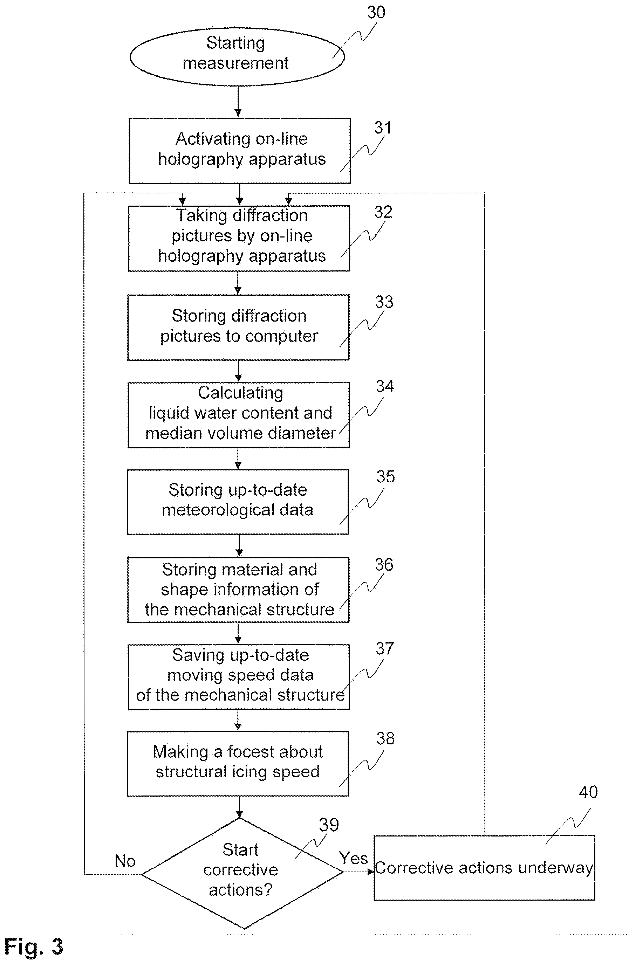

**Figure 3** depicts an example flow diagram how an ice accumulation forecast of a mechanical structure may be accomplished. The invention is not limited to an ice accumulation forecast of the rotor blade 51 of the wind turbine 5 that is depicted in Figure 1 that in the following description is used as an example of mechanical structure.

In the depicted flow diagram of Figure 3 and corresponding description the actual ice accumulation forecast process is accomplished in the server 4 that belongs to the measurement system 100 according to the invention.

However, the inventive method is not limited to the embodiment of Figure 3 where the server 4 makes the ice accumulation forecast. In another advantageous embodiment of the invention the depicted method steps of Figure 3 may be executed in the computer 3.

In step 30 the measurement system 100 is activated by opening in the computer 3 a measurement program according to the invention. In this step at least a desired measurement interval, for example one image in a second, is entered to the computer 3.

In step 31 the computer 3 activates the in-line holographic measurement apparatus 1 by sending a starting command and also other measurement instructions that are needed during the measurement session to the in-line holographic measurement apparatus 1.

In step 32 the in-line holographic apparatus 1 takes diffraction images according to the instructions the computer 3 and advantageously sends the diffraction images to the computer 3.

It is obvious to a person skilled in the art that following method steps 33-37 may be accomplished also in a different order than it is depicted in Figure 3 without changing the end result that is an ice accumulation forecast of the rotor blade 51.

In step 33 the computer 3 stores at least temporally the received diffraction images to its memory unit. The computer 3 advantageously pre-processes the stored images from time to time. The computer 3 may for example remove from the diffraction images those images where a change from the previous diffraction images cannot be seen.

After pre-processing the computer 3 advantageously sends at least the pre-processed diffraction images 25a to the server 4.

In step 34 the server 4 utilizes advantageously a backward propagation prediction algorithm to calculate diameters of each cloud droplets 25, 26 and 27. The server 4 may also define the volume of each cloud droplet. Then the server 4 may calculate a total water amount in grams of all measured cloud droplets. Then the server 4 divides the water amount by the volume of the measurement space of the in-line holographic measurement apparatus 1. The calculation result depicts water volume versus measurement volume, i.e. liquid water content (LWC) g/m3 in the measurement space of the in-line holographic measurement apparatus 1.

The server may also calculate a droplet size distribution of the measured cloud droplets 25, 26 and 27. From that calculation result data may be defined the median volume diameter (MVD), which is an essential parameter in icing models of different mechanical structures known in the art.

In step 35 the server 4 receives up-to-date meteorological measurement data of the weather station 6 that is near a site of the wind turbine 5 and stores the weather data into its memory unit. In one advantageous embodiment the computer 3 sends the meteorological measurement data to the server 4.

In another advantageous embodiment the server 4 fetches meteorological measurement data of the weather station 6 directly from the meteorological weather station 6.

In step 36 the server 4 receives material and 3D -model data of the rotor blade 51. In one advantageous embodiment the computer 3 sends said material and 3D - model data of the rotor blade 51 to the server 4.

In another advantageous embodiment the server 4 may fetch the material and 3D -model data of the rotor blade 51 directly from database 4A via connection 41.

In step 37 the server 4 receives up-to-date rotating data of the rotor blade 51 advantageously from the computer 3.

In step 38 the server 4 advantageously combines the liquid data content (LWC), the median volume diameter (MVD), the up-to-date meteorological measurement data, 3D -model data and the material data and moving speed of the rotor blade 51 with a known icing model of the rotor blade 51. The combining result is a forecast of ice accumulation at different times in the near future for the rotor blade 51 of the wind turbine 5.

In the end of step 38 the server 4 advantageously sends the ice accumulation forecast to the computer 3. In one advantageous embodiment the server 4 saves the icing forecast also to the database 4A.

In step 39 the computer 3 first receives the ice accumulation forecast and in a second sub-phase may make a decision about a need of corrective actions due to the ice accumulation forecast.

If the decision in step 39 is "No" then the computer 3 may only send to the in-line-holographic measurement apparatus 1 a command to continue in a measurement state.

If the decision in step 39 is "Yes" then in one advantageous embodiment the computer 3 makes at least an alert for a need of corrective actions due to the ice accumulation forecast.

In another advantageous embodiment the computer 3 starts immediately corrective actions. The computer 3 may for example change the rotating speed of the turbine 5, start a heating system of the rotor blade 51 or turn the wind turbine 5 to a direction that minimizes the icing speed.

In step 40 the corrective actions in the wind turbine are underway. The computer 3 affirms also in this alternative to the in-line-holographic measurement apparatus 1 a command to continue in a measurement state.

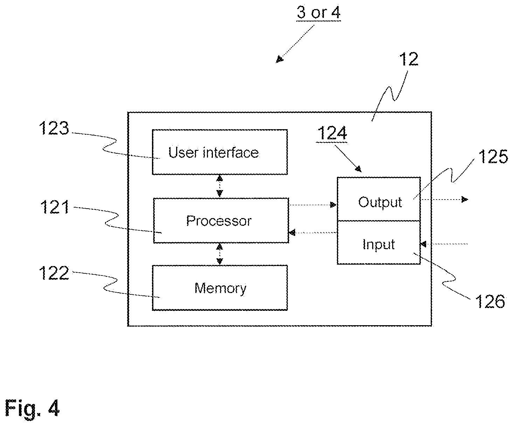

**Figure 4** shows functional main elements or parts of the computer 3 or the server 4 utilized in the implementation of the method utilized for determining present icing circumstances or belonging to the accumulation forecasting system 100 according to the invention. The computer 3 or server 4 comprises a processor or processor means 121, which advantageously comprise an arithmetic logic unit, a number of different registers and control circuits. A data storing arrangement 122, such as memory unit or memory means, whereon computer-readable information, programs or mechanical structure data can be stored, has been connected to the processor means 121. The memory means 122 typically contain memory units, which allow both reading and writing functions (Random Access Memory, RAM), and memory units containing non-volatile memory, from which data can only be read (Read Only Memory, ROM).

The computer 3 or the server 4 also comprises an interface element 124, which comprises an input or input means 126 for receiving data from the in-line holographic measurement apparatus 1, from the wind turbine 5, from the meteorological weather station 6 and from the database 4A. The data received with the input means 126 is advantageously transferred to be processed by the processor means 121 of the computer 3 or server 4.

The interface element 124 also comprises an output or output means 125, with which utilized different kind measurement data is transferred from the processor means 121 and with which the processor means 121 can advantageously send the icing circumstance forecast to a data processing device of an administrator of the depicted power turbine 5, for example.

The computer 3 or server 4 advantageously also comprises a user interface 123, which comprises means for receiving data and/or control commands from the administrator of the power turbine 5. The user interface 123 can for example comprise a keyboard, a touch screen, a microphone and a speaker.

The processor means 121, the memory means 122, the interface element 124 and the user interface 123 are electrically connected together to systematically execute received and/or stored data or information in accordance with predetermined and substantially pre-programmed operational sequences. Such operational sequences also include the operational sequences of a computer product by which the depicted method steps of Figure 3 by which an ice accumulation forecast of a mechanical structure is accomplished.

It is obvious to someone skilled in the art that the functions of the present icing circumstances forecasting method can advantageously also be implemented as a so-called cloud service or cloud computing. In this embodiment the administrator is not aware of using a spread-out service, because the use experience corresponds to the view of a locally functioning system. The administrator sees the interface, just as in the embodiment where the ice accumulation forecasting system 100 is implemented in a computer 3 or server 4.

Some advantageous embodiments of the icing circumstances forecasting method and system according to the invention have been described above. The invention is not limited to the embodiments described above, but the inventive idea can be applied in numerous ways within the scope of the claims.

## Claims

1. A method for measuring present icing circumstances, the method comprising:
- receiving (35) by a computer (3) meteorological measurement data from a weather station (6)
- recording (32) diffraction images (25a) due to cloud droplets (25) situated in an open measurement space by an image detector (22) of a digital in-line holography apparatus (1), and
- storing the recorded diffraction images (25a) to the computer (3), wherein the computer further accomplishes steps of:
- calculating (34) sizes and number of the cloud droplets (25, 26, 27) in the open measurement space by utilizing the recorded diffraction images (25a)
- calculating (34) a liquid water content and median volume diameter of the cloud droplets (25, 26, 27) detected in the open measurement space based on the calculated sizes and number of the cloud droplets (25, 26, 27), and
- combining (38) the liquid water content and median volume diameter calculation results with meteorological measurement data for determining present icing circumstances.

2. The method according to claim 1, **characterized in that** for making a forecast about an ice accumulation on a mechanical structure (51) the computer further accomplishes steps of:
- fetching (36) material and shape information of the mechanical structure (51) from a database (4A) comprising material and 3D models of mechanical structures
- receiving (37) information depicting a moving velocity of the mechanical structure (51), and
- combining them with the present icing circumstances to make a forecast of the ice accumulation on the mechanical structure (51).

3. The method according to claim 1, **characterized in that** the digital in-line holography apparatus (1) utilizes a point-like monochromatic light source (12) having a wavelength from 400 nm to 1100 nm.

4. The method according to claim 3, **characterized in that** the image detector (22) and the point-like monochromatic light source (12) are controlled to function in a pulse manner for recording diffraction images (25a) of the cloud droplets (25, 26, 27) from several distances above the image detector (22).

5. The method according to claim 4, **characterized in that** the calculation of sizes and number of the cloud droplets (25, 26, 27) is accomplished by utilizing a backward propagation prediction algorithm or neural network to the received diffraction images (25a).

6. The method according to claim 1, **characterized in that** meteorological measurement data from the weather station (6) comprises temperature, wind speed, wind direction and relativity humidity data.

7. A measurement system (100) for measuring present icing circumstances, the measurement system comprising:
- a digital in-line holography apparatus (1) comprising a monochromatic light source (12) and matrix detector (22), the digital in-line holography apparatus (1) being configured to record diffraction images (25a) due to cloud droplets (25, 26, 27) situated in an open measurement space of the digital in-line holography apparatus (1)
- a computer (3) configured to receive meteorological measurement data from a weather station (6), and
- a server (4) connectable via a communication network (7) to the computer (3),
wherein the computer (3) or the server (4) is further configured to:
- calculate sizes and number of the cloud droplets (25, 26, 27) in the open measurement space by utilizing the recorded diffraction images (25a)
- calculate a liquid water content and median volume diameter of the cloud droplets (25, 26, 27) detected in the open measurement space based on the calculated sizes and number of the cloud droplets (25, 26, 27), and
- combine the liquid water content and median volume diameter calculation results with meteorological measurement data for determining present icing circumstances.

8. The measurement system according to claim 7, **characterized in that** for making a forecast about an ice accumulation on a mechanical structure (51) the computer (3) or the server (4) is further configured to:
- fetch (36) material and shape information of the mechanical structure (51) from a database (4A) comprising material and 3D models of mechanical structures
- receive (37) information depicting a moving velocity of the mechanical structure (51), and
- combine them with the present icing circumstances to make a forecast of the ice accumulation on the mechanical structure (51).

9. The measurement system according to claim 7, **characterized in that** the digital in-line holography apparatus (1) is configured to utilize a point-like monochromatic light source (12) having a wavelength from 400 nm to 1100 nm.

10. The measurement system according to claim 9, **characterized in that** the matrix detector (22) is configured to control the point-like monochromatic light source (12) to function in a pulsed manner for recording diffraction images (25a) of the cloud droplets (25, 26, 27) from several distances above the matrix detector (22).

11. The measurement system according to claim 10, **characterized in that** in calculating sizes and number of the cloud droplets (25, 26, 27) the computer (3) or the server (4) is configured to utilize a backward propagation prediction algorithm or neural network to the received diffraction pictures (25a).

12. The measurement system according to claim 7, **characterized in that** meteorological measurement data from the weather station (6) comprises temperature, wind speed, wind direction and relativity humidity data.

13. A computer program product comprising computer program code means adapted to perform the following program code steps when said program is executed on a computer for measuring present icing circumstances, comprising:
- code means for receiving (35) meteorological measurement data from a weather station (6), and
- code means for recording (32) diffraction pictures (25a) from a matrix detector (22) of a digital in-line holography apparatus (1) the diffraction pictures that are generated by cloud droplets (25, 26, 27) situated in an open measurement space,
wherein, for being adapted to forecast structural icing, the computer program further comprises:
- code means for calculating (34) sizes and number of the cloud droplets (25, 26, 27) in an open measurement space of an in-line holographic measurement apparatus (1) by utilizing the recorded diffraction images (25a)
- code means for calculating (34) a liquid water content and median volume diameter of the cloud droplets detected (25, 26, 27) in the open measurement space based on the calculated sizes and number of the cloud droplets (25, 26, 27), and
- code means for combining (38) the liquid water content and median volume diameter calculation results with meteorological measurement data for determining present icing circumstances.

14. The computer program product according to claim 13, **characterized in that** that for making a forecast about an ice accumulation on a mechanical structure (51) the computer program further comprises:
- code means for fetching (36) material and shape information of the mechanical structure (51) from a database (4A) comprising material and 3D models of mechanical structures
- code means for receiving (37) information depicting a moving velocity of the mechanical structure (51), and
- code means for combining them with the present icing circumstances to make a forecast of the ice accumulation on the mechanical structure (51).

## Patentansprüche

1. Verfahren zur Messung der gegenwärtigen Vereisungsumstände, wobei das Verfahren Folgendes umfasst:
- Empfangen (35) von einem Computer (3) meteorologische Messdaten von einer Wetterstation (6)
- Aufzeichnen (32) von Beugungsbildern (25a) aufgrund von Wolkentröpfchen (25), die sich in einem offenen Messraum befinden, durch einen Bilddetektor (22) einer digitalen Inline-Holographievorrichtung (1) und
- Speichern der aufgezeichneten Beugungsbilder (25a) auf dem Computer (3), wobei der Computer ferner folgende Schritte ausführt:
- Berechnen (34) der Größe und Anzahl der Wolkentröpfchen (25, 26, 27) im offenen Messraum unter Verwendung der aufgezeichneten Beugungsbilder (25a)
- Berechnen (34) eines Flüssigkeitswassergehalts und eines mittleren Volumendurchmessers der Wolkentröpfchen (25, 26, 27), die im offenen Messraum erfasst wurden, basierend auf den berechneten Größen und der Anzahl der Wolkentröpfchen (25, 26, 27), und
- Kombinieren (38) der Berechnungsergebnisse des Flüssigkeitswassergehalts und des mittleren Volumendurchmessers mit meteorologischen Messdaten zur Bestimmung der gegenwärtigen Vereisungsumstände.

2. Verfahren nach Anspruch 1, **dadurch gekennzeichnet, dass** der Computer zur Erstellung einer Vorhersage über eine Eisansammlung auf einer mechanischen Struktur (51) ferner folgende Schritte ausführt:
- Abrufen (36) von Material- und Forminformationen der mechanischen Struktur (51) aus einer Datenbank (4A), die Material- und 3D-Modelle mechanischer Strukturen umfasst
- Empfangen von (37) Informationen, die eine Bewegungsgeschwindigkeit der mechanischen Struktur (51) darstellen, und
- Kombinieren mit den gegenwärtigen Vereisungsumständen, um eine Vorhersage der Eisansammlung auf der mechanischen Struktur zu machen (51) .

3. Verfahren nach Anspruch 1, **dadurch gekennzeichnet, dass** die digitale Inline-Holographievorrichtung (1) eine punktförmige monochromatische Lichtquelle (12) mit einer Wellenlänge von 400 nm bis 1100 nm verwendet.

4. Verfahren nach Anspruch 3, **dadurch gekennzeichnet, dass** der Bilddetektor (22) und die punktförmige monochromatische Lichtquelle (12) gesteuert werden, pulsierend zum Aufzeichnen von Beugungsbildern (25a) der Wolkentröpfchen (25, 26, 27) aus mehreren Abständen über dem Bilddetektor (22) zu arbeiten.

5. Verfahren nach Anspruch 4, **dadurch gekennzeichnet, dass** die Berechnung der Größe und Anzahl der Wolkentröpfchen (25, 26, 27) unter Verwendung eines Rückwärtsausbreitungsvorhersagealgorithmus oder eines neuronalen Netzwerks zu den empfangenen Beugungsbildern (25a) durchgeführt wird.

6. Verfahren nach Anspruch 1, **dadurch gekennzeichnet, dass** meteorologische Messdaten von der Wetterstation (6) Temperatur-, Windgeschwindigkeits-, Windrichtungs- und Relativitätsfeuchtigkeitsdaten umfassen.

7. Messsystem (100) zum Messen der gegenwärtigen Vereisungsumstände, wobei das Messsystem Folgendes umfasst:
- eine digitale Inline-Holographievorrichtung (1), die eine monochromatische Lichtquelle (12) und einen Matrixdetektor (22) umfasst, wobei die digitale Inline-Holographievorrichtung (1) konfiguriert ist, um Beugungsbilder (25a) aufgrund von Wolkentröpfchen (25, 26, 27) aufzuzeichnen, die sich in einem offenen Messraum der digitalen Inline-Holographievorrichtung (1) befinden
- einen Computer (3), der konfiguriert ist, um meteorologische Messdaten von einer Wetterstation (6) zu empfangen, und
- einen Server (4), der über ein Kommunikationsnetzwerk (7) mit dem Computer (3) verbunden werden kann, wobei der Computer (3) oder der Server (4) ferner konfiguriert ist, um:
- Größe und Anzahl der Wolkentröpfchen (25, 26, 27) im offenen Messraum unter Verwendung der aufgezeichneten Beugungsbilder (25a) zu berechnen
- einen Flüssigkeitswassergehalt und einen mittleren Volumendurchmesser der im offenen Messraum erfassten Wolkentröpfchen (25, 26, 27) anhand der berechneten Größen und Anzahl der Wolkentröpfchen (25, 26, 27) zu berechnen, und
- die Berechnungsergebnisse des Flüssigkeitswassergehalts und des mittleren Volumendurchmessers mit meteorologischen Messdaten zur Bestimmung der gegenwärtigen Vereisungsumstände zu kombinieren.

8. Messsystem nach Anspruch 7, **dadurch gekennzeichnet, dass** zur Erstellung einer Vorhersage über eine Eisansammlung auf einer mechanischen Struktur (51) der Computer (3) oder der Server (4) ferner konfiguriert ist, um:
- Material- und Forminformationen der mechanischen Struktur (51) aus einer Datenbank (4A) abzurufen (36), die Material- und 3D-Modelle mechanischer Strukturen umfasst
- Informationen zu erhalten (37), die eine Bewegungsgeschwindigkeit der mechanischen Struktur (51) darstellen, und
- sie mit den gegenwärtigen Vereisungsumständen zu kombinieren, um eine Vorhersage der Eisansammlung auf der mechanischen Struktur zu machen (51).

9. Messsystem nach Anspruch 7, **dadurch gekennzeichnet, dass** die digitale Inline-Holographievorrichtung (1) konfiguriert ist, um eine punktförmige monochromatische Lichtquelle (12) mit einer Wellenlänge von 400 nm bis 1100 nm zu verwenden.

10. Messsystem nach Anspruch 9, **dadurch gekennzeichnet, dass** der Matrixdetektor (22) konfiguriert ist, um die punktförmige monochromatische Lichtquelle (12) zu steuern, in gepulster Weise zu arbeiten, um Beugungsbilder (25a) der Wolkentröpfchen (25, 26, 27) aus mehreren Abständen über dem Matrixdetektor (22) aufzunehmen.

11. Messsystem nach Anspruch 10, **dadurch gekennzeichnet, dass** bei der Berechnung der Größe und Anzahl der Wolkentröpfchen (25, 26, 27) der Computer (3) oder der Server (4) konfiguriert ist, um einen Rückwärtsausbreitungsvorhersagealgorithmus oder ein neuronales Netzwerk für die empfangenen Beugungsbilder (25a) zu verwenden.

12. Messsystem nach Anspruch 7, **dadurch gekennzeichnet, dass** meteorologische Messdaten von der Wetterstation (6) Temperatur-, Windgeschwindigkeits-, Windrichtungs- und Relativitätsfeuchtigkeitsdaten umfassen.

13. Computerprogrammprodukt mit Computerprogrammcode-Mitteln, die angepasst sind, um die folgenden Programmcodeschritte auszuführen, wenn das Programm auf einem Computer ausgeführt wird, um die gegenwärtigen Vereisungsumstände zu messen, umfassend:
- Code-Mittel zum Empfangen (35) von meteorologischen Messdaten von einer Wetterstation (6) und
- Code-Mittel zum Aufzeichnen (32) von Beugungsbildern (25a) von einem Matrixdetektor (22) einer digitalen Inline-Holographievorrichtung (1), wobei sich die Beugungsbilder, die von Wolkentröpfchen (25, 26, 27) erzeugt werden, in einem offenen Messraum befinden, wobei zur Anpassung an die Vorhersage der strukturellen Vereisung das Computerprogramm ferner Folgendes umfasst:
- Code-Mittel zum Berechnen (34) von Größen und Anzahl der Wolkentröpfchen (25, 26, 27) in einem offenen Messraum einer holographischen Inline-Messvorrichtung (1) unter Verwendung der aufgezeichneten Beugungsbilder (25a)
- Code-Mittel zum Berechnen (34) eines Flüssigkeitswassergehalts und eines mittleren Volumendurchmessers der im offenen Messraum nachgewiesenen Wolkentröpfchen (25, 26, 27) auf der Grundlage der berechneten Größe und Anzahl der Wolkentröpfchen (25, 26, 27)), und
- Code-Mittel zum Kombinieren (38) der Berechnungsergebnisse des Flüssigkeitswassergehalts und des mittleren Volumendurchmessers mit meteorologischen Messdaten zur Bestimmung der gegenwärtigen Vereisungsumstände.

14. Computerprogrammprodukt nach Anspruch 13, **dadurch gekennzeichnet, dass** das Computerprogramm zur Erstellung einer Vorhersage über eine Eisansammlung auf einer mechanischen Struktur (51) ferner Folgendes umfasst:
- Code-Mittel zum Abrufen (36) von Material- und Forminformationen der mechanischen Struktur (51) aus einer Datenbank (4A), die Material- und 3D-Modelle mechanischer Strukturen umfasst
- Code-Mittel zum Empfangen (37) von Informationen, die eine Bewegungsgeschwindigkeit der mechanischen Struktur (51) darstellen, und
- Code-Mittel zum Kombinieren mit den gegenwärtigen Vereisungsumständen, um eine Vorhersage der Eisansammlung auf der mechanischen Struktur (51) zu machen.

## Revendications

1. Procédé destiné à mesurer des circonstances de givrage actuelles, le procédé comprenant :
- la réception (35) par un ordinateur (3) de données de mesure météorologiques provenant d'une station météorologique (6)
- l'enregistrement (32) d'images de diffraction (25a) dues à des gouttelettes de nuage (25) situées dans un espace de mesure ouvert par un détecteur d'image (22) d'un appareil d'holographie numérique en ligne (1), et
- le stockage des images de diffraction (25a) enregistrées sur l'ordinateur (3),
dans lequel l'ordinateur accomplit en outre les étapes :
- de calcul (34) des tailles et du nombre de gouttelettes de nuage (25, 26, 27) dans l'espace de mesure ouvert en utilisant les images de diffraction (25a) enregistrées
- de calcul (34) d'une teneur en eau liquide et d'un diamètre volumique médian des gouttelettes de nuage (25, 26, 27) détectées dans l'espace de mesure ouvert sur la base des tailles et du nombre calculés de gouttelettes de nuage (25, 26, 27), et
- de combinaison (38) des résultats du calcul de la teneur en eau liquide et du diamètre volumique médian avec des données de mesure météorologiques pour déterminer des circonstances de givrage actuelles.

2. Procédé selon la revendication 1, **caractérisé en ce que**, pour réaliser une prévision concernant une accumulation de givre sur une structure métallique (51), l'ordinateur accomplit en outre les étapes :
- d'extraction (36) d'informations de matériau et de forme de la structure mécanique (51) à partir d'une base de données (4A) comprenant des modèles de matériau et 3D de structures mécaniques
- de réception (37) d'informations représentant une vitesse de déplacement de la structure mécanique (51), et
- de combinaison de celles-ci avec les circonstances de givrage actuelles pour réaliser une prévision de l'accumulation de givre sur la structure mécanique (51).

3. Procédé selon la revendication 1, **caractérisé en ce que** l'appareil d'holographie numérique en ligne (1) utilise une source de lumière monochromatique de type point (12) ayant une longueur d'onde de 400 nm à 1 100 nm.

4. Procédé selon la revendication 3, **caractérisé en ce que** le détecteur d'image (22) et la source de lumière monochromatique de type point (12) sont commandés pour fonctionner d'une manière pulsée pour enregistrer des images de diffraction (25a) des gouttelettes de nuage (25, 26, 27) à partir de plusieurs distances au-dessus du détecteur d'image (22).

5. Procédé selon la revendication 4, **caractérisé en ce que** le calcul des tailles et du nombre de gouttelettes de nuage (25, 26, 27) est réalisé en utilisant un algorithme de prédiction de propagation vers l'arrière ou un réseau neuronal pour les images de diffraction (25a) reçues.

6. Procédé selon la revendication 1, **caractérisé en ce que** des données de mesure météorologiques provenant de la station météorologique (6) comprennent des données de température, de vitesse du vent, de direction du vent et d'humidité relative.

7. Système de mesure (100) destiné à mesurer des circonstances de givrage actuelles, le système de mesure comprenant :
- un appareil d'holographie numérique en ligne (1) comprenant une source de lumière monochromatique (12) et un détecteur matriciel (22), l'appareil d'holographie numérique en ligne (1) étant configuré pour enregistrer des images de diffraction (25a) dues à des gouttelettes de nuage (25, 26, 27) situées dans un espace de mesure ouvert de l'appareil d'holographie numérique en ligne (1)
- un ordinateur (3) configuré pour recevoir des données de mesure météorologiques provenant d'une station météorologique (6), et
- un serveur (4) pouvant être connecté via un réseau de communication (7) à l'ordinateur (3), dans lequel l'ordinateur (3) ou le serveur (4) est en outre configuré pour :
- calculer des tailles et le nombre de gouttelettes de nuage (25, 26, 27) dans l'espace de mesure ouvert en utilisant les images de diffraction (25a) enregistrées
- calculer une teneur en eau liquide et un diamètre volumique médian des gouttelettes de nuage (25, 26, 27) détectées dans l'espace de mesure ouvert sur la base des tailles et du nombre calculés de gouttelettes de nuage (25, 26, 27), et
- combiner la teneur en eau liquide et le diamètre volumique médian avec des données de mesure météorologiques pour déterminer des circonstances de givrage actuelles.

8. Système de mesure selon la revendication 7, **caractérisé en ce que**, pour réaliser une prévision concernant une accumulation de givre sur une structure métallique (51), l'ordinateur (3) ou le serveur (4) est en outre configuré pour :
- extraire (36) des informations de matériau et de forme de la structure mécanique (51) à partir d'une base de données (4A) comprenant des modèles de matériau et 3D de structures mécaniques
- recevoir (37) des informations représentant une vitesse de déplacement de la structure mécanique (51), et
- les combiner avec les circonstances de givrage actuelles pour réaliser une prévision de l'accumulation de givre sur la structure mécanique (51).

9. Système de mesure selon la revendication 7, **caractérisé en ce que** l'appareil d'holographie numérique en ligne (1) est configuré pour utiliser une source de lumière monochromatique de type point (12) ayant une longueur d'onde de 400 nm à 1 100 nm.

10. Système de mesure selon la revendication 9, **caractérisé en ce que** le détecteur matriciel (22) est configuré pour commander la source de lumière monochromatique de type point (12) pour qu'elle fonctionne d'une manière pulsée pour enregistrer des images de diffraction (25a) des gouttelettes de nuage (25, 26, 27) à partir de plusieurs distances au-dessus du détecteur matriciel (22).

11. Système de mesure selon la revendication 10, **caractérisé en ce que**, dans le calcul des tailles et du nombre de gouttelettes de nuage (25, 26, 27), l'ordinateur (3) ou le serveur (4) est configuré pour utiliser un algorithme de prédiction de propagation vers l'arrière ou un réseau neuronal pour les images de diffraction (25a) reçues.

12. Système de mesure selon la revendication 7, **caractérisé en ce que** des données de mesure météorologiques provenant de la station météorologique (6) comprennent des données de température, de vitesse du vent, de direction du vent et d'humidité relative.

13. Produit de programme informatique comprenant un moyen de code de programme informatique conçu pour mettre en œuvre les étapes de code de programme suivantes lorsque ledit programme est exécuté sur un ordinateur pour mesurer des circonstances de givrage actuelles, comprenant :
- un moyen de code pour recevoir (35) des données de mesure météorologiques provenant d'une station météorologique (6), et
- un moyen de code pour enregistrer (32) des images de diffraction (25a) provenant d'un détecteur matriciel (22) d'un appareil d'holographie numérique en ligne (1), les images de diffraction qui sont générées par des gouttelettes de nuage (25, 26, 27) étant situées dans un espace de mesure ouvert,
dans lequel, pour être conçu pour prévoir le givrage structurel, le programme informatique comprend en outre :
- un moyen de code pour calculer (34) des tailles et le nombre de gouttelettes de nuage (25, 26, 27) dans un espace de mesure ouvert d'un appareil d'holographie numérique en ligne (1) en utilisant les images de diffraction (25a) enregistrées
- un moyen de code pour calculer (34) une teneur en eau liquide et un diamètre volumique médian des gouttelettes de nuage (25, 26, 27) détectées dans l'espace de mesure ouvert sur la base des tailles et du nombre calculés de gouttelettes de nuage (25, 26, 27), et
- un moyen de codage pour combiner (38) les résultats du calcul de la teneur en eau liquide et du diamètre volumique médian avec des données de mesure météorologiques pour déterminer les circonstances de givrage actuelles.

14. Produit de programme informatique selon la revendication 13, **caractérisé en ce que**, pour réaliser une prévision concernant une accumulation de givre sur une structure métallique (51), le programme informatique comprend en outre :
- un moyen de code pour extraire (36) des informations de matériau et de forme de la structure mécanique (51) à partir d'une base de données (4A) comprenant des modèles de matériau et 3D de structures mécaniques
- un moyen de code pour recevoir (37) des informations représentant une vitesse de déplacement de la structure mécanique (51), et
- un moyen de code pour les combiner avec les circonstances de givrage actuelles pour réaliser une prévision de l'accumulation de givre sur la structure mécanique (51).
